(19) Europäisches Patentamt
European Patent Office
Office européen des brevets

(11) EP 0 888 058 B1

(12) EUROPEAN PATENT SPECIFICATION

(45) Date of publication and mention of the grant of the patent:
**17.10.2001 Bulletin 2001/42**

(21) Application number: **97915111.5**

(22) Date of filing: **06.03.1997**

(51) Int Cl.[7]: **A01N 43/90**

(86) International application number:
**PCT/US97/04151**

(87) International publication number:
**WO 97/33475 (18.09.1997 Gazette 1997/40)**

# (54) HERBICIDAL MIXTURES

HERBIZIDE MISCHUNGEN

MELANGES HERBICIDES

(84) Designated Contracting States:
**CH DE ES FR GB IT LI PT**

(30) Priority: **12.03.1996 US 13292 P**

(43) Date of publication of application:
**07.01.1999 Bulletin 1999/01**

(73) Proprietor: **E.I. DU PONT DE NEMOURS AND COMPANY**
**Wilmington Delaware 19898 (US)**

(72) Inventors:
- **RUGGIERO, Marc**
  **Wilmington, DE 19808 (US)**
- **ROWE, Loston**
  **Hockessin, DE 19707 (US)**
- **AMUTI, Kofi, Sam**
  **Wilmington, DE 19808 (US)**

(74) Representative: **Beacham, Annabel Rose et al**
**Frank B. Dehn & Co.,**
**European Patent Attorneys,**
**179 Queen Victoria Street**
**London EC4V 4EL (GB)**

(56) References cited:
**EP-A- 0 204 146** **US-A- 5 332 718**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 888 058 B1

## Description

FIELD OF THE INVENTION

The present invention relates to mixtures of herbicides that have a synergistic effect on weeds.

BACKGROUND OF THE INVENTION

The control of undesired vegetation is extremely important in achieving high crop efficiency. This can be achieved by the selective control of the growth of weeds in such useful crops as alfalfa, barley, corn (maize), oats, peanut (groundnut), potato, rape, rice, sorghum, soybean, sugar beet, tomato, wheat, vegetables, perennial plantation crops including banana, citrus, cocoa, coffee, grapes, hops, plantain, pineapple, oil palm, rubber, sugarcane, tea, fruit trees, nut trees and forests, and turf, among others. Unchecked weed growth in such useful crops can cause significant reduction in productivity and thereby result in increased costs to the consumers. The control of undesired vegetation in noncrop areas is also important. The need for finding products that achieve such results continues to be commercially important.

Combinations of herbicides are typically used to broaden the spectrum of plant control or enhance the level of control of any given species through additive effect. Certain rare combinations surprisingly give a greater-than-additive or synergistic effect. Several such valuable combinations have now been discovered.

U.S. 4,213,773 discloses 2-[2,4-dichloro-5-(2-propynyloxy)phenyl]-5,6,7,8-tetrahydro-1,2,4-triazolo[4,3-α] pyridin-3(2*H*)-one, and U.S. 5,332,718 discloses the utility of this compound for selective control of weeds in plantation crops. These references do not specifically disclose the particular mixtures of the present invention, nor do they describe or suggest the unexpected synergistic utility of said mixtures.

SUMMARY OF THE INVENTION

This invention relates to mixtures of herbicides that produce synergistic results. The herbicidal mixtures comprise herbicidally effective amounts of the compound of Formula **I** in admixture with herbicidally effective amounts of one of the compounds of Formulae **II** through **IX.** This invention also relates to herbicidal compositions comprising effective amounts of the aforesaid mixtures and at least one of the following: surfactant, solid or liquid diluent. This invention also relates to a method of controlling undesired vegetation comprising applying to the locus of the undesired vegetation herbicidally effective amounts of the aforesaid mixtures.

The mixtures of the invention comprising the Formula **I** and Formulae **II-IX** compounds are described below:

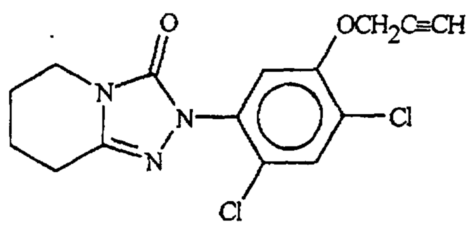

**I**

2-[2,4-dichloro-5-(2-propynyloxy)phenyl]-5,6,7,8-tetrahydro-1,2,4-triazolo[4,3-*a*]pyridin-3(2*H*)-one **(I);**

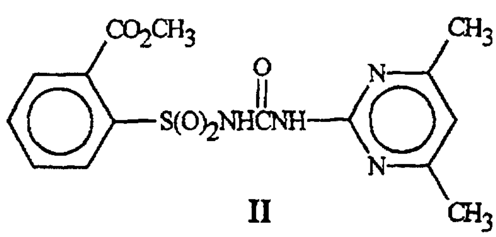

**II**

methyl 2-[[[[(4,6-dimethy]-2-pyrimidinyl)amino]carbonyl]amino]sulfonyl]benzoate (sulfometuron methyl, **II**) and its ag-

riculturally useful salts;

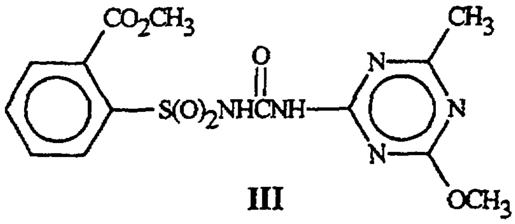

**III**

methyl 2-[[[[(4-methoxy-6-methyl-1,3,5-triazin-2-yl)amino]carbonyl]amino]sulfonyl]benzoate (metsulfuron methyl, **III**) and its agriculturally useful salts;

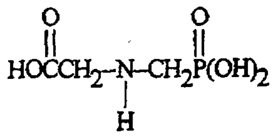

**IV**

*N*-(phosphonomethyl)glycine (glyphosate, **IV)** and its agriculturally useful salts;

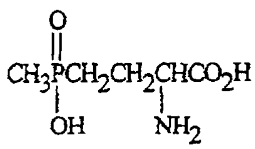

**V**

(±)-2-amino-4-(hydroxymethylphosphinyl)butanoic acid (glufosinate, V) and its agriculturally useful salts;

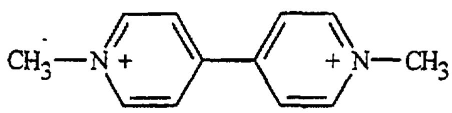

**VI**

1,1'-dimethyl-4,4'-bipyridinium (paraquat, **VI**) in the form of agriculturally useful salts;

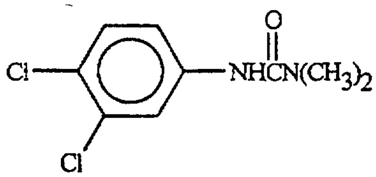

**VII**

*N'*-(3,4-dichlorophenyl)-*N,N*-dimethylurea (diuron, **VII**);

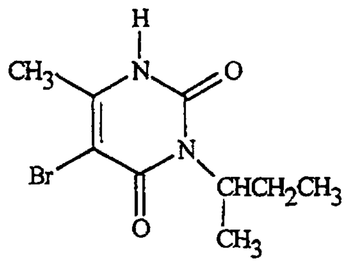

**VIII**

5-bromo-6-methyl-3-(1-methylpropyl)-2,4(1*H*,3*H*)-pyrimidinedione (bromacil, **VIII);** and

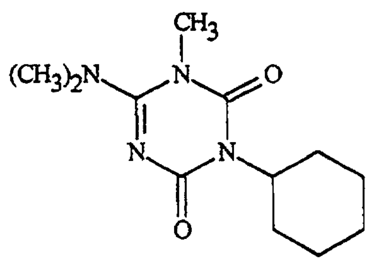

**IX**

3-cyclohexyl-6-(dimethylamino)-1-methyl-1,3,5-triazine-2,4(1*H*,3*H*)-dione (hexazinone, **IX**).

The compounds of Formulae **II-V** and **VIII** can be present in the form of salts. In view of the close relationship between these compounds in their free forms and their agriculturally useful salts, including their equilibration under physiological and environmental conditions, hereinbefore and hereinafter any reference to Formulae **II-V** and **VIII** is to be understood as including both the free compounds and their agriculturally useful salts, where appropriate and expedient. Similarly, the dication of Formula **VI** is a salt component, and the counterions present will exchange under physiological and environmental conditions. Therefore hereinbefore and hereinafter any reference to Formula VI is to be understood as including all agriculturally useful salts comprising Formula **VI,** where appropriate and expedient.

The mixtures of the invention preferred for enhanced herbicidal activity include:

a) the compound of Formula **I** and the compound of Formula **II,**
b) the compound of Formula **I** and the compound of Formula **III,**
c) the compound of Formula **I** and the compound of Formula **IV,**
d) the compound of Formula **I** and the compound of Formula **V,**
e) the compound of Formula **I** and the compound of Formula **VI,**
f) the compound of Formula **I** and the compound of Formula **VII,**
g) the compound of Formula **I** and the compound of Formula **VIII,** and
h) the compound of Formula **I** and the compound of Formula **IX.**

The herbicidal compositions of the invention preferred for enhanced herbicidal activity include:

a) the compound of Formula **I** and the compound of Formula **II,**
b) the compound of Formula **I** and the compound of Formula **III,**
c) the compound of Formula **I** and the compound of Formula **IV,**
d) the compound of Formula **I** and the compound of Formula **V,**
e) the compound of Formula **I** and the compound of Formula **VI,**
f) the compound of Formula **I** and the compound of Formula **VII,**
g) the compound of Formula **I** and the compound of Formula **VIII,** and
h) the compound of Formula **I** and the compound of Formula **IX.**

The preferred crops for application of the mixtures of the invention are perennial plantation crops including banana, citrus, coffee, cocoa, grapes, hops, oil palm, plantain, pineapple, rubber, sugarcane, tea, fruit trees, nut trees and forests such as eucalyptus and conifers (e.g., loblolly pine), and turf (e.g., Kentucky bluegrass, St. Augustine grass,

Kentucky fescue, Bermuda grass).

DETAILS OF THE INVENTION

The Formula **I** compound can be prepared as described in U.S. 4,213,773. The synthesis involves reacting the phenol 1 with 3-chloropropyne **(2)** in the presence of a base such as anhydrous potassium carbonate in a suitable solvent, such as dry acetonitrile.

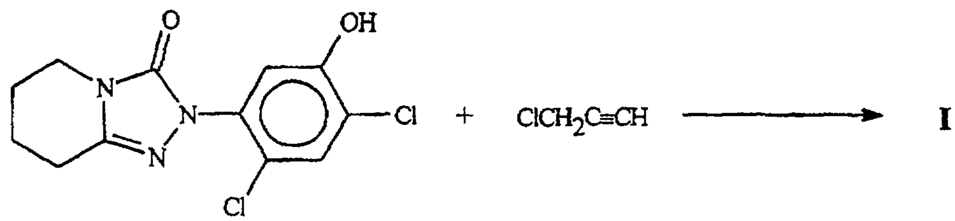

**1** **2** **I**

Mixtures of the Formula **I** compound with several specific commercially available herbicides (Formulae **II-IX**) has now been discovered to demonstrate surprising synergistic control of key weeds.

Sulfometuron methyl (Formula **II**) is sold by DuPont as the active ingredient in Oust® herbicide. Although sulfometuron methyl is most conveniently obtained as a commercial product, it and its agriculturally useful salts can be prepared by methods described in U.S. 4,394,506.

Metsulfuron methyl (Formula **III**) is sold by DuPont as the active ingredient in Ally® herbicide and Escort® herbicide. Although metsulfuron methyl is most conveniently obtained as a commercial product, it and its agriculturally useful salts can be prepared by methods described in U.S. 4,383,113.

Glyphosate (Formula **IV**) is sold in the form of the isopropylammonium salt (Formula **IVa**) by Monsanto as the active ingredient in Roundup® herbicide and Sting® herbicide. Glyphosate is sold in the form of the trimesium salt (Formula **IVb**) by Zeneca as the active ingredient in Touchdown® herbicide. Although glyphosate is most conveniently obtained as a commercial product, it and its agriculturally useful salts can be prepared by methods described in U.S. 4,315,765 and U.S. 4,405,531.

Glufosinate (Formula V) is sold in the form of the ammonium salt (Formula Va) by AgrEvo as the active ingredient in Basta® herbicide. Although glufosinate is most conveniently obtained as a commercial product, it and its agriculturally useful salts can be prepared by methods described in U.S. 4,168,963.

Paraquat (Formula **VI**) is always present as the dication in a salt. The salt anions typically used are chloride, forming paraquat dichloride (Formula **VIa**). Paraquat dichloride is sold by Zeneca as the active ingredient in Gramoxone® herbicide. Although paraquat is most conveniently obtained as a commercial product, the agriculturally suitable salts comprising it can be prepared by methods described in U.S. 2,972,528 and U.S. 3,793,335.

Diuron (Formula **VII**) is sold by DuPont as the active ingredient in Karmex® herbicide, along with bromacil as the active ingredient in Krovar® herbicide, and along with hexazinone as the active ingredient in Velpar® K herbicide. Although diuron is most conveniently obtained as a commercial product, it can be prepared by the methods described in U.S. 2,655,445.

Bromacil (Formula **VIII**) is sold by DuPont as the active ingredient in Hyvar® X herbicide and Hyvar® DF herbicide, as the lithium salt (bromacil-lithium, Formula **VIIIa**) as the active ingredient in Hyvar XL herbicide, and along with diuron as the active ingredient in Krovar® herbicide. Although bromacil is most conveniently obtained as a commercial product, it can be prepared by the methods described in U.S. 3,352,862.

Hexazinone (Formula **IX**) is sold by DuPont as the active ingredient in Velpar® herbicide and along with diuron as the active ingredient in Velpar® K herbicide. Although hexazinone is most conveniently obtained as a commercial product, it can be prepared by the methods described in U.S. 3,902,997.

Formulation/Utility

The mixtures of the Formula **I** and Formulae **II-IX** compounds can be formulated in a number of ways:

(a) the Formula **I** and Formulae **II-IX** compounds can be formulated separately and applied separately or applied simultaneously in an appropriate weight ratio, e.g., as a tank mix; or
(b) the Formula **I** and Formulae **II-IX** compounds can be formulated together in the proper weight ratio.

Mixtures of the Formula **I** and Formulae **II-IX** compounds will generally be used in formulation with an agriculturally suitable carrier comprising a liquid or solid diluent and/or a surfactant wherein the formulation is consistent with the physical properties of the active ingredients, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredients can be (micro)encapsulated and further formed into a suspension or solid formulation; alternatively the entire formulation of active ingredient can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation.

The formulations will typically contain effective amounts of active ingredients, diluent and surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders | 5-90 | 0-94 | 1-15 |
| Suspensions, Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers,* 2nd Ed., Dorland Books, Caldwell, New Jersey. Typical liquid diluents are described in Marsden, *Solvents Guide,* 2nd Ed., Interscience, New York, 1950. *McCutcheon's Detergents and Emulsifiers Annual,* Allured Publ. Corp., Ridgewood, New Jersey, as well as Sisely and Wood, *Encyclopedia of Surface Active Agents*, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N*,*N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillinite, attapulgite and kaolin, starch, sugar, silica, talc, diatomaceous earth, urea, calcium carbonate, sodium carbonate and bicarbonate, and sodium sulfate. Liquid diluents include, for example, water, *N*,*N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Chemically stabilized aqueous sulfonylurea or agriculturally suitable sulfonylurea salt dispersions are taught in U.S. 4,936,900. Solution formulations of sulfonylureas with improved chemical stability are taught in U.S. 4,599,412. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", *Chemical Engineering,* December 4, 1967, pp 147-48, *Perry's Chemical Engineer's Handbook*, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding formulation, see U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, *Weed Control as a Science,* John Wiley and Sons, Inc.. New York, 1961, pp 81-96; and Hance et al., *Weed Control Handbook*, 8th Ed., Blackwell Scientific Publications, Oxford, 1989.

In the following Examples, all percentages are by weight and all formulations are prepared in conventional

ways. Compound numbers are as described in the Index Table on page 13.

Example A

| High Strength Concentrate | |
|---|---|
| Compound 1 | 78.8% |
| Compound 2 | 19.7% |
| silica aerogel | 0.5% |
| synthetic amorphous fine silica | 1.0%. |

Example B

| Wettable Powder | |
|---|---|
| Compound 1 | 39.0% |
| Compound 3 | 26.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example C

| High Strength Concentrate | |
|---|---|
| Compound 1 | 24.6% |
| Compound 4 | 73.9% |
| silica aerogel | 0.5% |
| synthetic amorphous fine silica | 1.0%. |

Example D

| High Strength Concentrate | |
|---|---|
| Compound 1 | 32.8% |
| Compound 5 | 65.7% |
| silica aerogel | 0.5% |
| synthetic amorphous fine silica | 1.0%. |

Example E

| High Strength Concentrate | |
|---|---|
| Compound 1 | 24.6% |
| Compound 6 | 73.9% |
| silica aerogel | 0.5% |

(continued)

| High Strength Concentrate | |
| --- | --- |
| synthetic amorphous fine silica | 1.0%. |

Example F

| High Strength Concentrate | |
| --- | --- |
| Compound 1 | 24.6% |
| Compound 7 | 73.9% |
| silica aerogel | 0.5% |
| synthetic amorphous fine silica | 1.0%. |

Example G

| Granule | |
| --- | --- |
| Compound 1 | 1.1% |
| Compound 8 | 8.9% |
| attapulgite granules (low volatile matter, 0.71/0.30 mm; U.S.S. No. 25-50 sieves) | 90.0%. |

Example H

| Aqueous Suspension | |
| --- | --- |
| Compound 1 | 5.0% |
| Compound 9 | 20.0% |
| hydrated attapulgite | 3.0% |
| crude calcium ligninsulfonate | 10.0% |
| sodium dihydrogen phosphate | 0.5% |
| water | 61.5%. |

Example I

| Extruded Pellet | |
| --- | --- |
| Compound 1 | 5.0% |
| Compound 10 | 20.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Test results indicate that mixtures of Formula **I** with Formulae **II-IX** are highly active herbicides, providing unexpected synergistic control of selected grass and broadleaf weeds.

The mixtures of the invention are valued for their utility for selective weed control in perennial plantation crops including banana, citrus, coffee, cocoa, grapes, hops, oil palm, plantain, pineapple, rubber, sugarcane, tea, fruit trees, nut trees and forests such as eucalyptus and conifers (e.g., loblolly pine), and turf (e.g., Kentucky bluegrass, St. Augustine grass, Kentucky fescue, Bermuda grass). These mixtures are also valued for their utility for enhanced broad-spectrum pre- and/or postemergence weed control in areas around fuel storage tanks, industrial storage areas, parking lots, drive-in theaters, billboards and railroad structures, and along fence rows and highways.

The mixtures of Formula **I** with Formula **II** or **III** are particularly valued, because they retain acceptable levels of selectivity in crops such as banana, coffee, cocoa, hops, oil palm, plantain, pineapple, rubber, sugarcane, tea, forests and turf. The mixtures of Formula **I** with Formula **IV, V** or **VI** are particularly valued, because they retain acceptable levels of selectivity in crops such as banana, citrus, coffee, cocoa, grapes, hops, oil palm, plantain, pineapple, rubber, tea, fruit trees, nut trees and forests. The mixtures of Formula **I** with Formula **VII** are particularly valued, because they retain acceptable levels of selectivity in crops such as banana, grapes, oil palm, plantain, rubber, sugarcane, fruit trees and nut trees. The mixtures of Formula **I** with Formula **VIII** are particularly valued, because they retain acceptable levels of selectivity in crops such as citrus. The mixtures of Formula **I** with Formula **IX** are particularly valued, because they retain acceptable levels of selectivity in crops such as sugarcane and forests.

Many of the mixtures provide useful weed control when applied in sequential applications. Sequential applications of the mixtures may be particularly useful for controlling weeds that have germinated after the initial application or for improving control of larger weeds that may not be entirely controlled by a single application. In particular, sequential applications of the mixtures may be preferred in certain crop and noncrop utilities.

The Formula **I** and Formulae **II-IX** mixtures of this invention can additionally be used in combination with other commercial herbicides, insecticides or fungicides. A mixture of one or more of the following herbicides with the Formula **I** and Formulae **II-IX** mixtures of this invention may be particularly useful for weed control. Examples of other herbicides as mixture partners are: alachlor, ametryn, asulam, atrazine, cinmethylin, cyanazine, 2,4-D and its butotyl, butyl, isoctyl and isopropyl esters and its dimethylammonium, diolamine and trolamine salts, dalapon, dalapon-sodium, 2,4-DB and its dimethylammonium, potassium and sodium salts, dicamba and its dimethylammonium, potassium and sodium salts, EPTC, fluazifop-butyl, fluazifop-P-butyl, fosamine-ammonium, imazamethabenz-methyl, imazapyr, imazaquin, imazaquin-ammonium, imazethapyr, imazethapyr-ammonium, imazosulfuron, lenacil, linuron, mefluidide, metribuzin, norflurazon, oxadiazon, oxyfluorfen, pendimethalin, picloram, picloram-potassium, quizalofop-ethyl, quizalofop-P-ethyl, quizalofop-P-tefuryl, sethoxydim, simazine, tebuthiuron, terbacil, triclopyr, triclopyr-butotyl, triclopyr-triethylammonium, and trifluralin. Furthermore, the herbicides bromacil, diuron, glufosinate, glufosinate-ammonium, glyphosate, glyphosate-isopropylammonium, glyphosate-sesquisodium, glyphosate-trimesium, hexazinone, metsulfuron methyl, paraquat dichloride and sulfometuron methyl are useful as additional mixture partners in combination with other of the Formulae **II-IX** herbicidal compounds in admixture with the Formula **I** herbicidal compound.

In certain instances, combinations with other herbicides having a similar spectrum of control but a different mode of action will be particularly advantageous for resistance management.

Generally, the herbicidally effective amounts of the compounds of Formulae **I-IX** in the mixtures will vary depending on the specific compounds selected, environmental conditions, formulation, method of application, amount and type of vegetation present, etc. The herbicidally effective amounts of Formula **I** relative to Formula **II** is generally in a ratio of 64:1 to 1:2, preferably in a ratio of 32:1 to 1:1, and most preferably in a ratio of 8:1 to 2:1. The herbicidally effective amounts of Formula I relative to Formula **III** is generally in a ratio of 16:1 to 1:8, preferably in a ratio of 8:1 to 1:4, and most preferably in a ratio of 4:1 to 1:2. The herbicidally effective amounts of Formula **I** relative to Formula **IV** is generally in a ratio of 2:1 to 1:10, preferably in a ratio of 1:1 to 1:8, and most preferably in a ratio of 1:1 to 1:5. The herbicidally effective amounts of Formula I relative to Formula **V** is generally in a ratio of 1:1 to 1:10, preferably in a ratio of 1:1 to 1:8, and most preferably in a ratio of 1:1 to 1:5. The herbicidally effective amounts of Formula **I** relative to Formula **VI** is generally in a ratio of 2:1 to 1:10, preferably in a ratio of 1:1 to 1:8, and most preferably in a ratio of 1:1 to 1:5. The herbicidally effective amounts of Formula **I** relative to Formula **VII** is generally in a ratio of 1:4 to 1:24, preferably in a ratio of 1:4 to 1:16, and most preferably in a ratio of 1:5 to 1:12. The herbicidally effective amounts of Formula **I** relative to Formula **VIII** is generally in a ratio of 1:1 to 1:16, preferably in a ratio of 1:1 to 1:10, and most preferably in a ratio of 1:1 to 1:8. The herbicidally effective amounts of Formula **I** relative to Formula **IX** is generally in a ratio of 1:1 to 1:12, preferably in a ratio of 1:1 to 1:10, and most preferably in a ratio of 1:1 to 1:8.

Generally a herbicidally effective amount of the Formula **I** compound is applied at a rate from 5 to 5000 g ai/ha, preferably at a rate from 10 to 2000 g ai/ha, and most preferably at a rate from 10 to 1000 g ai/ha. Generally a herbicidally effective amount of the Formula **II** compound is applied at a rate from 0.25 to 840 g ai/ha, preferably at a rate from 2 to 420 g ai/ha, and most preferably at a rate from 3 to 260 g ai/ha. Generally a herbicidally effective amount of the Formula **III** compound is applied at a rate from 0.25 to 350 g ai/ha, preferably at a rate from 2 to 200 g ai/ha, and most preferably at a rate from 3 to 175 g ai/ha. Generally a herbicidally effective amount of the Formula **IV** compound is applied at a rate from 140 to 9000 g ai/ha, preferably at a rate from 320 to 6700 g ai/ha, and most preferably at a rate from 500 to 4500 g ai/ha. Generally a herbicidally effective amount of the Formula V compound is applied at a rate from 100 to 5000 g ai/ha, preferably at a rate from 250 to 2500 g ai/ha, and most preferably at a rate from 500 to 2000 g ai/ha. Generally a herbicidally effective amount of the Formula **VI** compound is applied at a rate from 25 to 2000 g ai/ha, preferably at a rate from 50 to 1000 g ai/ha, and most preferably at a rate from 100 to 500 g ai/ha.

Generally a herbicidally effective amount of the Formula **VII** compound is applied at a rate from 200 to 10000 g ai/ha, preferably at a rate from 500 to 5000 g ai/ha, and most preferably at a rate from 500 to 4000 g ai/ha. Generally a herbicidally effective amount of the Formula **VIII** compound is applied at a rate from 200 to 10000 g ai/ha, preferably at a rate from 500 to 4000 g ai/ha, and most preferably at a rate from 500 to 3000 g ai/ha. Generally a herbicidally effective amount of the Formula **IX** compound is applied at a rate from 100 to 10000 g ai/ha, preferably at a rate from 100 to 3000 g ai/ha, and most preferably at a rate from 100 to 1000 g ai/ha. One skilled in the art can readily determine herbicidally effective application rates and ratios of the herbicide of Formula **I** to the herbicides of Formulae **II-IX** as well as timing necessary for the desired level of weed control and crop safety.

The Formula **I** triazinone (Compound 1) was tested in combination with the Formula **II** sulfonylurea (Compound 2), the Formula **III** sulfonylurea (Compound 3), the Formula **IV** phosphonate (Compounds 4 and 5), the Formula **V** phosphonate (Compound 6), the Formula **VI** pyridinium salt (Compound 7), the Formula **VII** urea (Compound 8), the Formula **VIII** triazinedione (Compound 9) and the Formula **IX** triazinedione (Compound 10). The compounds of Formulae **I-IX** are listed in the Index Table below by number referred to in the following test data:

| **INDEX TABLE** | | |
|---|---|---|
| Compound Number | Formula | Name |
| 1 | **I** | 2-[2,4-dichloro-5-(2-propynyloxy)phenyl]-5,6,7,8-tetrahydro-1,2,4-triazolo (4,3-a]pyridin-3(2*H*)-one |
| 2 | **II** | sulfometuron methyl |
| 3 | **III** | metsulfuron methyl |
| 4 | **IVa** | glyphosate-isopropylammonium |
| 5 | **IVb** | glyphosate-trimesium |
| 6 | **Va** | glufosinate-ammonium |
| 7 | **VIa** | paraquat dichloride |
| 8 | **VII** | diuron |
| 9 | **VIII** | bromacil |
| 10 | **IX** | hexazinone |

The data in the following Tables A and B demonstrate the efficacy of the Formula **I** and Formula **II** mixtures of this invention against specific weeds. The weed control afforded by the mixtures of this invention are not limited, however, to these species. Compound numbers are as described in the Index Table on page 13.

<u>Test A Protocol</u>

10-cm square plastic pots were partially filled with sandy loam soil and planted with seeds of large crabgrass (*Digitaria sanguinalis*), which were covered with 0.5 cm of soil. Preemergence treatments were applied by diluting dry flowable formulations of the compounds in a non-phytotoxic solvent containing a surfactant and then spraying the treatments onto the soil surface using a stationary laboratory circulating belt sprayer calibrated to deliver 327 L/ha through a single nozzle. Compound 1 was applied at 1, 2, 4 and 8 g ai/ha. Compound 2 was applied at 1 g ai/ha. Mixtures of Compound 1 at 1, 2, 4 and 8 g ai/ha and Compound 2 at 1 ai/ha were also applied. Individual treatments were replicated four times. Treatments were positioned in a greenhouse in a randomized complete block design. The greenhouse was maintained at a 26 °C average daily temperature, and natural light in the greenhouse was supplemented with artificial light to achieve a photoperiod of 14 hours. At 30 days after spraying, the plants were evaluated for injury as compared to control plants that were sprayed preemergence with a non-phytotoxic solvent containing a surfactant. Injury was evaluated visually using a 0 to 100% scale where 0 indicates no effect and 100 indicates complete control.

For Test A, the mean response of each treatment was determined. Colby's equation was used to calculate the expected additive herbicidal effect of the mixtures of Compound 1 and Compound 2. Colby's equation (Colby, S. R. "Calculating Synergistic and Antagonistic Responses of Herbicide Combinations," *Weeds*, 15(1), pp 20-22 (1967)) calculates the expected additive effect of herbicidal mixtures, and for two active ingredients is of the form:

$$P_{a+b} = P_a + P_b - (P_a P_b / 100)$$

wherein

$P_{a+b}$ is the percentage effect of the mixture expected from additive contribution of the individual components,
$P_a$ is the observed percentage effect of the first active ingredient at the same use rate as in the mixture, and
$P_b$ is the observed percentage effect of the second active ingredient at the same use rate as in the mixture.

Results of Test A are shown in Table A, which lists the observed response of a specific weed to Compound 1 and Compound 2 applied alone as single active ingredients, the observed responses of the specific weed to mixtures of Compound 1 and Compound 2, and the expected additive effect of the herbicidal mixtures of Compound 1 and Compound 2 (Colby's equation).

TABLE A*

| Effect of Compound 1 and Compound 2 as Active Ingredients Alone and in Mixture | | | |
|---|---|---|---|
| Compound 1 | Compound 2 | Crabgrass | |
| | | Mean | Expected† |
| *Alone* | | | |
| 1 | 0 | 0 | - |
| 2 | 0 | 20 | - |
| 4 | 0 | 42 | - |
| 8 | 0 | 84 | - |
| 0 | 1 | 31 | - |
| *Mixtures* | | | |
| 1 | 1 | 48 | 31 |
| 2 | 1 | 76 | 45 |
| 4 | 1 | 75 | 60 |
| 8 | 1 | 92 | 89 |

* Rates are expressed in g ai/ha for Compound 1 and Compound 2. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test B Protocol

10-cm square plastic pots were partially filled with sandy loam soil and planted with seeds of southern sandbur (*Cenchrus echinatus*), which were covered with 0.5 cm of soil. Preemergence treatments were applied by diluting dry flowable formulations of the compounds in a non-phytotoxic solvent containing a surfactant and then spraying the treatments onto the soil surface using a stationary laboratory circulating belt sprayer calibrated to deliver 327 L/ha through a single nozzle. Compound 1 was applied at 1, 2 and 4 g ai/ha. Compound 2 was applied at 0.5 g ai/ha. Mixtures of Compound 1 at 1, 2 and 4 g ai/ha and Compound 2 at 0.5 ai/ha were also applied. Individual treatments were replicated four times. Treatments were positioned in a greenhouse in a randomized complete block design. The greenhouse was maintained at a 26 °C average daily temperature, and natural light in the greenhouse was supplemented with artificial light to achieve a photoperiod of 14 hours. At 30 days after spraying, the plants were evaluated for injury as compared to control plants that were sprayed preemergence with a non-phytotoxic solvent containing a surfactant. Injury was evaluated visually using a 0 to 100% scale where 0 indicates no effect and 100 indicates complete control.
Results of Test B are shown in Table B, which lists the observed response of a specific weed to Compound 1 and Compound 2 applied alone as single active ingredients, the observed responses of the specific weed to mixtures of Compound 1 and Compound 2, and the expected additive effect of the herbicidal mixtures of Compound I and Compound 2 (Colby's equation).

TABLE B*

| Effect of Compound 1 and Compound 2 as Active Ingredients Alone and in Mixture | | | |
|---|---|---|---|
| Compound 1 | Compound 2 | Sandbur | |
| | | Mean | Expected† |
| *Alone* | | | |
| 1 | 0 | 5 | - |
| 2 | 0 | 12 | - |
| 4 | 0 | 31 | - |
| 0 | 0.5 | 60 | - |
| *Mixtures* | | | |
| 1 | 0.5 | 65 | 62 |
| 2 | 0.5 | 85 | 65 |
| 4 | 0.5 | 86 | 72 |

* Rates are expressed in g ai/ha for Compound 1 and Compound 2. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Weeds other than those specifically listed in Tables A and B are also controlled by mixtures of Compound 1 and Compound 2. Different ratios of Compound 1 to Compound 2, and different formulation types, also provide useful weed control from the combination of the two herbicides.

The data in the following Tables C and D demonstrate the efficacy of the Formula **I** and Formula **III** mixtures of this invention against specific weeds. The weed control afforded by the mixtures of this invention are not limited, however, to these species. Compound numbers are as described in the Index Table on page 13.

Test C Protocol

10-cm square plastic pots were partially filled with sandy loam soil and planted with seeds of large crabgrass (*Digitaria sanguinalis*), which were covered with 0.5 cm of soil. Preemergence treatments were applied by diluting dry flowable formulations of the compounds in a non-phytotoxic solvent containing a surfactant and then spraying the treatments onto the soil surface using a stationary laboratory circulating belt sprayer calibrated to deliver 327 L/ha through a single nozzle. Compound 1 was applied at 1, 2 and 4 g ai/ha. Compound 3 was applied at 1 and 2 g ai/ha. Mixtures of Compound I at 1, 2 and 4 g ai/ha and Compound 3 at 1 and 2 ai/ha were also applied. Individual treatments were replicated four times. Treatments were positioned in a greenhouse in a randomized complete block design. The greenhouse was maintained at a 24 °C average daily temperature, and natural light in the greenhouse was supplemented with artificial light to achieve a photoperiod of 14 hours. At 33 days after spraying, the plants were evaluated for injury as compared to control plants that were sprayed preemergence with a non-phytotoxic solvent containing a surfactant. Injury was evaluated visually using a 0 to 100% scale where 0 indicates no effect and 100 indicates complete control.

Results of Test C are shown in Table C, which lists the observed response of a specific weed to Compound I and Compound 3 applied alone as single active ingredients, the observed responses of the specific weed to mixtures of Compound 1 and Compound 3, and the expected additive effect of the herbicidal mixtures of Compound 1 and Compound 3 (Colby's equation).

TABLE C*

| Effect of Compound 1 and Compound 3 as Active Ingredients Alone and in Mixture | | | |
|---|---|---|---|
| Compound 1 | Compound 3 | Crabgrass | |
| | | Mean | Expected† |
| *Alone* | | | |
| 1 | 0 | 0 | - |
| 2 | 0 | 11 | - |
| 4 | 0 | 61 | - |
| 0 | 1 | 8 | - |
| 0 | 2 | 31 | - |
| *Mixtures* | | | |
| 1 | 1 | 9 | 8 |
| 2 | 1 | 50 | 18 |
| 4 | 1 | 72 | 64 |
| 1 | 2 | 54 | 31 |
| 2 | 2 | 66 | 39 |
| 4 | 2 | 84 | 73 |

* Rates are expressed in g ai/ha for Compound 1 and Compound 3. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test D Protocol

10-cm square plastic pots were partially filled with sandy loam soil and planted with seeds of pitted morningglory (*Ipomoea lacunosa*), which were covered with 0.5 cm of soil. Preemergence treatments were applied by diluting dry flowable formulations of the compounds in a non-phytotoxic solvent containing a surfactant and then spraying the treatments onto the soil surface using a stationary laboratory circulating belt sprayer calibrated to deliver 327 L/ha through a single nozzle. Compound 1 was applied at 1, 2 and 4 g ai/ha. Compound 3 was applied at 1 g ai/ha. Mixtures of Compound 1 at 1, 2 and 4 g ai/ha and Compound 3 at 1 g ai/ha were also applied. Individual treatments were replicated four times. Treatments were positioned in a greenhouse in a randomized complete block design. The greenhouse was maintained at a 24 °C average daily temperature, and natural light in the greenhouse was supplemented with artificial light to achieve a photoperiod of 14 hours. At 33 days after spraying, the plants were evaluated for injury as compared to control plants that were sprayed preemergence with a non-phytotoxic solvent containing a surfactant. Injury was evaluated visually using a 0 to 100% scale where 0 indicates no effect and 100 indicates complete control.

Results of Test D are shown in Table D, which lists the observed response of a specific weed to Compound 1 and Compound 3 applied alone as single active ingredients, the observed responses of the specific weed to mixtures of Compound 1 and Compound 3, and the expected additive effect of the herbicidal mixtures of Compound 1 and Compound 3 (Colby's equation).

TABLE D*

| Effect of Compound I and Compound 3 as Active Ingredients Alone and in Mixture | | | |
|---|---|---|---|
| Compound 1 | Compound 3 | Morningglory | |
| | | Mean | Expected† |
| *Alone* | | | |
| 1 | 0 | 0 | - |

* Rates are expressed in g ai/ha for Compound 1 and Compound 3. Data are reported as percent control.
† "Expected" are expected responses calculated according to Colby, S. R. "Calculating Synergistic and Antagonistic Responses of Herbicide Combinations," *Weeds*, 15(1), pp 20-22 (1967).

TABLE D* (continued)

| Effect of Compound I and Compound 3 as Active Ingredients Alone and in Mixture | | | |
|---|---|---|---|
| Compound 1 | Compound 3 | Morningglory | |
| | | Mean | Expected† |
| *Alone* | | | |
| 2 | 0 | 0 | - |
| 4 | 0 | 13 | - |
| 8 | 0 | 18 | - |
| 0 | 1 | 86 | - |
| *Mixtures* | | | |
| I | 1 | 91 | 86 |
| 2 | 1 | 92 | 86 |
| 4 | 1 | 95 | 88 |
| 8 | 1 | 95 | 89 |

* Rates are expressed in g ai/ha for Compound 1 and Compound 3. Data are reported as percent control.
† "Expected" are expected responses calculated according to Colby, S. R. "Calculating Synergistic and Antagonistic Responses of Herbicide Combinations," *Weeds*, 15(1), pp 20-22 (1967).

Weeds other than those specifically listed in Tables C and D are also controlled by mixtures of Compound 1 and Compound 3. Different ratios of Compound 1 to Compound 3, and different formulation types, also provide useful weed control from the combination of the two herbicides.

The data in the following Tables E-H demonstrate the efficacy of the Formula **I** and Formula **IV** mixtures of this invention against specific weeds. The weed control afforded by the mixtures of this invention are not limited, however, to these species. Compound numbers are as described in the Index Table on page 13.

Test E Protocol

Guineagrass (*Panicum maximum*) was grown 21 days in a greenhouse to approximately 24-cm height in 18-cm round pots containing a 60:40 mixture of sterilized sandy loam soil and Metro-Mix® 350 potting soil. Treatments were applied to the test species by diluting the formulated compounds in a non-phytotoxic solvent containing a surfactant, and spraying the treatments onto the plants using a stationary laboratory circulating belt sprayer calibrated to deliver 311 L/ha through a single nozzle. Compound 1 was applied at 31 and 62 g ai/ha. Compound 4 was applied at 125 and 250 g ai/ha. Mixtures of Compound 1 at 31 and 62 g ai/ha with Compound 4 at 125 and 250 g ai/ha were also applied. Individual treatments were replicated three times. Treatments were positioned in a greenhouse in a randomized complete block design. The greenhouse was maintained at a 28 °C average daily temperature, and natural light in the greenhouse was supplemented with artificial light to achieve a photoperiod of 14 hours. At 28 days after spraying, the plants were evaluated for injury as compared to control plants that were sprayed only with non-phytotoxic solvent. Injury was evaluated visually using a 0 to 100% scale where 0 indicates no effect and 100 indicates complete control.

Results of Test E are shown in Table E, which lists the observed response of a specific weed to Compound 1 and Compound 4 applied alone as single active ingredients, the observed responses of the specific weed to mixtures of Compound 1 and Compound 4, and the expected additive effect of the herbicidal mixtures of Compound 1 and Compound 4 (Colby's equation).

TABLE E*

| Effect of Compound 1 and Compound 4 as Active Ingredients Alone and in Mixture | | | |
|---|---|---|---|
| Compound 1 | Compound 4 | Guineagrass | |
| | | Mean | Expected† |
| *Alone* | | | |
| 31 | 0 | 37 | - |
| 62 | 0 | 73 | - |
| 0 | 125 | 0 | - |
| 0 | 250 | 0 | - |
| *Mixtures* | | | |
| 31 | 125 | 53 | 37 |
| 62 | 125 | 80 | 73 |
| 31 | 250 | 70 | 37 |
| 62 | 250 | 78 | 73 |

* Rates are expressed in g ai/ha for Compound 1 and Compound 4. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test F Protocol

Guineagrass (*Panicum maximum*) seeds were planted in 18-cm round fiber pots filled with a 60:40 ratio of sterilized sandy loam soil and Metro-mix® 350 potting mixture. The plants were treated postemergence at the 6- to 8-leaf stage with test compounds formulated with a non-phytotoxic solvent. Compound 1 was applied at 250 and 500 g ai/ha. Compound 4 was applied at 250 and 500 g ai/ha. Mixtures of Compound I at 250 and 500 g ai/ha with Compound 4 at 250 and 500 g ai/ha were also applied. The treated plants were grown in a greenhouse. At the end of the tests, the plants were visually rated and compared with untreated controls using a scale of 0 to 100 where 0 indicates no effect and 100 indicates complete control.

Results of Test F are shown in Table F, which lists the observed response of a specific weed to Compound 1 and Compound 4 applied alone as single active ingredients, the observed responses of the specific weed to mixtures of Compound 1 and Compound 4, and the expected additive effect of the herbicidal mixtures of Compound 1 and Compound 4 (Colby's equation).

TABLE F*

| Effect of Compound 1 and Compound 4 as Active Ingredients Alone and in Mixture | | | |
|---|---|---|---|
| Compound 1 | Compound 4 | Guineagrass | |
| | | Mean | Expected† |
| *Alone* | | | |
| 250 | 0 | 90 | - |
| 500 | 0 | 95 | - |
| 0 | 250 | 10 | - |
| 0 | 500 | 30 | - |
| *Mixtures* | | | |
| 250 | 250 | 95 | 91 |
| 250 | 500 | 95 | 93 |

* Rates are expressed in g ai/ha for Compound 1 and Compound 4. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

TABLE F* (continued)

| Effect of Compound 1 and Compound 4 as Active Ingredients Alone and in Mixture | | | |
|---|---|---|---|
| Compound 1 | Compound 4 | Guineagrass | |
| *Mixtures* | | | |
| 500 | 250 | 100 | 96 |
| 500 | 500 | 100 | 96 |

Test G Protocol

Pitted morningglory (*Ipomoea lacunosa*) was grown 21 days in a greenhouse to approximately 16-cm height in 18-cm round pots containing a 60:40 mixture of sterilized sandy loam soil and Metro-Mix® 350 potting soil. Treatments were applied to the test species by diluting the formulated compounds in a non-phytotoxic solvent containing a surfactant, and spraying the treatments onto the plants using a stationary laboratory circulating belt sprayer calibrated to deliver 311 L/ha through a single nozzle. Compound 1 was applied at 31, 62 and 125 g ai/ha. Compound 4 was applied at 125, 250 and 500 g ai/ha. Mixtures of Compound 1 at 31, 62 and 125 g ai/ha with Compound 4 at 125, 250 and 500 g ai/ha were also applied. Individual treatments were replicated three times. Treatments were positioned in a greenhouse in a randomized complete block design. The greenhouse was maintained at a 28 °C average daily temperature, and natural light in the greenhouse was supplemented with artificial light to achieve a photoperiod of 14 hours. At 28 days after spraying, the plants were evaluated for injury as compared to control plants that were sprayed only with non-phytotoxic solvent. Injury was evaluated visually using a 0 to 100% scale where 0 indicates no effect and 100 indicates complete control.

Results of Test G are shown in Table G, which lists the observed response of a specific weed to Compound 1 and Compound 4 applied alone as single active ingredients, the observed responses of the specific weed to mixtures of Compound 1 and Compound 4, and the expected additive effect of the herbicidal mixtures of Compound I and Compound 4 (Colby's equation).

TABLE G*

| Effect of Compound 1 and Compound 4 as Active Ingredients Alone and in Mixture | | | |
|---|---|---|---|
| Compound 1 | Compound 4 | Morningglory | |
| | | Mean | Expected† |
| *Alone* | | | |
| 31 | 0 | 47 | - |
| 62 | 0 | 77 | - |
| 125 | 0 | 90 | - |
| 0 | 125 | 0 | - |
| 0 | 250 | 0 | - |
| 0 | 500 | 17 | - |
| *Mixtures* | | | |
| 31 | 125 | 70 | 47 |
| 62 | 125 | 100 | 77 |
| 125 | 125 | 100 | 90 |
| 31 | 250 | 77 | 47 |
| 62 | 250 | 85 | 77 |
| 125 | 250 | 100 | 90 |

* Rates are expressed in g ai/ha for Compound 1 and Compound 4. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

TABLE G* (continued)

| Effect of Compound 1 and Compound 4 as Active Ingredients Alone and in Mixture | | | |
|---|---|---|---|
| Compound 1 | Compound 4 | Morningglory | |
| *Mixtures* | | | |
| 31 | 500 | 83 | 56 |
| 62 | 500 | 87 | 81 |
| 125 | 500 | 93 | 92 |

Test H Protocol

Pitted morningglory (*Ipomoea lacunosa*) was grown 21 days in a greenhouse to approximately 16-cm height in 18-cm round pots containing a 60:40 mixture of sterilized sandy loam soil and Metro-Mix® 350 potting soil. Treatments were applied to the test species by diluting the formulated compounds in a non-phytotoxic solvent containing a surfactant, and spraying the treatments onto the plants using a stationary laboratory circulating belt sprayer calibrated to deliver 311 L/ha through a single nozzle. Compound 1 was applied at 31, 62 and 125 g ai/ha. Compound 5 was applied at 125, 250 and 500 g ai/ha. Mixtures of Compound 1 at 31, 62 and 125 g ai/ha with Compound 5 at 125, 250 and 500 g ai/ha were also applied. Individual treatments were replicated three times. Treatments were positioned in a greenhouse in a randomized complete block design. The greenhouse was maintained at a 28 °C average daily temperature, and natural light in the greenhouse was supplemented with artificial light to achieve a photoperiod of 14 hours. At 28 days after spraying, the plants were evaluated for injury as compared to control plants that were sprayed only with non-phytotoxic solvent. Injury was evaluated visually using a 0 to 100% scale where 0 indicates no effect and 100 indicates complete control.

Results of Test H are shown in Table H, which lists the observed response of a specific weed to Compound 1 and Compound 5 applied alone as single active ingredients, the observed responses of the specific weed to mixtures of Compound 1 and Compound 5, and the expected additive effect of the herbicidal mixtures of Compound 1 and Compound 5 (Colby's equation).

TABLE H*

| Effect of Compound 1 and Compound 5 as Active Ingredients Alone and in Mixture | | | |
|---|---|---|---|
| Compound 1 | Compound 5 | Morningglory | |
| | | Mean | Expected† |
| *Alone* | | | |
| 31 | 0 | 47 | - |
| 62 | 0 | 77 | - |
| 125 | 0 | 90 | - |
| 0 | 125 | 0 | - |
| 0 | 250 | 3 | - |
| 0 | 500 | 17 | - |
| *Mixtures* | | | |
| 31 | 125 | 95 | 47 |
| 31 | 250 | 90 | 49 |
| 31 | 500 | 98 | 56 |
| 62 | 250 | 90 | 78 |
| 125 | 125 | 100 | 90 |

* Rates are expressed in g ai/ha for Compound 1 and Compound 5. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Weeds other than those specifically listed in Tables E-H are also controlled by mixtures of Compound 1 with Compounds 4 and 5. Different ratios of Compound 1 to Compounds 4 and 5, and different formulation types, also provide useful weed control from the combination of the herbicides.

The following protocol was used for the test in Table I. Compound numbers are as described in the Index Table on page 13. The data demonstrate the efficacy of the Formula **I** and Formula **V** mixtures of this invention against a specific weed. The weed control afforded by the mixtures of this invention are not limited, however, to this species.

Test I Protocol

Pitted morningglory (*Ipomoea lacunosa*) was grown 21 days in a greenhouse to approximately 16-cm height in 18-cm round pots containing a 60:40 mixture of sterilized sandy loam soil and Metro-Mix® 350 potting soil. Treatments were applied to the test species by diluting the formulated compounds in a non-phytotoxic solvent containing a surfactant, and spraying the treatments onto the plants using a stationary laboratory circulating belt sprayer calibrated to deliver 311 L/ha through a single nozzle. Compound 1 was applied at 31, 62 and 125 g ai/ha. Compound 6 was applied at 125, 250 and 500 g ai/ha. Mixtures of Compound 1 at 31, 62 and 125 g ai/ha with Compound 6 at 125, 250 and 500 g ai/ha were also applied. Individual treatments were replicated three times. Treatments were positioned in a greenhouse in a randomized complete block design. The greenhouse was maintained at a 28 °C average daily temperature, and natural light in the greenhouse was supplemented with artificial light to achieve a photoperiod of 14 hours. At 28 days after spraying, the plants were evaluated for injury as compared to control plants that were sprayed only with non-phytotoxic solvent. Injury was evaluated visually using a 0 to 100% scale where 0 indicates no effect and 100 indicates complete control.

Results of Test H are shown in Table I, which lists the observed response of a specific weed to Compound 1 and Compound 6 applied alone as single active ingredients, the observed responses of the specific weed to mixtures of Compound 1 and Compound 6, and the expected additive effect of the herbicidal mixtures of Compound 1 and Compound 6 (Colby's equation). Weeds other than that specifically listed are also controlled by mixtures of Compound 1 and Compound 6. Different ratios of Compound 1 to Compound 6, and different formulation types, also provide useful weed control from the combination of the two herbicides.

TABLE I*

| Effect of Compound 1 and Compound 6 as Active Ingredients Alone and in Mixture | | | |
|---|---|---|---|
| Compound 1 | Compound 6 | Morningglory | |
| | | Mean | Expected† |
| *Alone* | | | |
| 31 | 0 | 47 | - |
| 62 | 0 | 77 | - |
| 125 | 0 | 90 | - |
| 0 | 125 | 0 | - |
| 0 | 250 | 7 | - |
| 0 | 500 | 80 | - |
| *Mixtures* | | | |
| 31 | 125 | 80 | 47 |
| 62 | 125 | 93 | 77 |
| 125 | 125 | 93 | 90 |
| 31 | 250 | 90 | 51 |
| 62 | 250 | 100 | 79 |
| 125 | 250 | 97 | 91 |

* Rates are expressed in g ai/ha for Compound 1 and Compound 6. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

TABLE I* (continued)

| Effect of Compound 1 and Compound 6 as Active Ingredients Alone and in Mixture | | | |
|---|---|---|---|
| Compound 1 | Compound 6 | Morningglory | |
| *Mixtures* | | | |
| 62 | 500 | 100 | 95 |
| 125 | 500 | 100 | 98 |

The data in the following Tables J and K demonstrate the efficacy of the Formula **I** and Formula **VI** mixtures of this invention against specific weeds. The weed control afforded by the mixtures of this invention are not limited, however, to these species. Compound numbers are as described in the Index Table on page 13.

Test J Protocol

Pitted morningglory (*Ipomoea lacunosa*) was grown 21 days in a greenhouse to approximately 16-cm height in 18-cm round pots containing a 60:40 mixture of sterilized sandy loam soil and Metro-Mix® 350 potting soil. Treatments were applied to the test species by diluting the formulated compounds in a non-phytotoxic solvent containing a surfactant, and spraying the treatments onto the plants using a stationary laboratory circulating belt sprayer calibrated to deliver 311 L/ha through a single nozzle. Compound 1 was applied at 31, 62 and 125 g ai/ha. Compound 7 was applied at 125, 250 and 500 g ai/ha. Mixtures of Compound 1 at 31, 62 and 125 g ai/ha with Compound 7 at 125, 250 and 500 g ai/ha were also applied. Individual treatments were replicated three times. Treatments were positioned in a greenhouse in a randomized complete block design. The greenhouse was maintained at a 28 °C average daily temperature, and natural light in the greenhouse was supplemented with artificial light to achieve a photoperiod of 14 hours. At 28 days after spraying, the plants were evaluated for injury as compared to control plants that were sprayed only with non-phytotoxic solvent. Injury was evaluated visually using a 0 to 100% scale where 0 indicates no effect and 100 indicates complete control.

Results of Test J are shown in Table J, which lists the observed response of a specific weed to Compound 1 and Compound 7 applied alone as single active ingredients,. the observed responses of the specific weed to mixtures of Compound I and Compound 7, and the expected additive effect of the herbicidal mixtures of Compound I and Compound 7 (Colby's equation).

TABLE J*

| Effect of Compound 1 and Compound 7 as Active Ingredients Alone and in Mixture | | | |
|---|---|---|---|
| Compound 1 | Compound 7 | Momingglory | |
| | | Mean | Expected† |
| *Alone* | | | |
| 31 | 0 | 47 | - |
| 62 | 0 | 77 | - |
| 125 | 0 | 90 | - |
| 0 | 125 | 7 | - |
| 0 | 250 | 37 | - |
| 0 | 500 | 57 | - |
| *Mixtures* | | | |
| 31 | 125 | 70 | 51 |
| 62 | 125 | 100 | 79 |
| 125 | 125 | 100 | 91 |

* Rates are expressed in g ai/ha for Compound 1 and Compound 7. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

TABLE J* (continued)

| Effect of Compound 1 and Compound 7 as Active Ingredients Alone and in Mixture | | | |
|---|---|---|---|
| Compound 1 | Compound 7 | Momingglory | |
| *Mixtures* | | | |
| 31 | 250 | 88 | 67 |
| 62 | 250 | 100 | 86 |
| 31 | 500 | 100 | 77 |

Test K Protocol

Guineagrass (*Panicum maximum*) seeds were planted in 18-cm round fiber pots filled with a 60:40 ratio of sterilized sandy loam soil and Metro-mix® 350 potting mixture. The plants were treated postemergence at the 6- to 8-leaf stage with test compounds formulated with a non-phytotoxic solvent. Compound 1 was applied at 500 g ai/ha. Compound 7 was applied at 250 g ai/ha. A mixture of Compound I at 500 g ai/ha with Compound 7 at 250 g ai/ha were also applied. The treated plants were grown in a greenhouse. At the end of the tests, the plants were visually rated and compared with untreated controls using a scale of 0 to 100 where 0 indicates no effect and 100 indicates complete control.

Results of Test K are shown in Table K, which lists the observed response of a specific weed to Compound 1 and Compound 7 applied alone as single active ingredients, the observed responses of the specific weed to mixtures of Compound 1 and Compound 7, and the expected additive effect of the herbicidal mixtures of Compound 1 and Compound 7 (Colby's equation).

TABLE K*

| Effect of Compound 1 and Compound 7 as Active Ingredients Alone and in Mixture | | | |
|---|---|---|---|
| Compound 1 | Compound 7 | Guineagrass | |
| | | Mean | Expected† |
| *Alone* | | | |
| 500 | 0 | 95 | - |
| 0 | 250 | 65 | - |
| *Mixture* | | | |
| 500 | 250 | 100 | 98 |

* Rates are expressed in g ai/ha for Compound 1 and Compound 7. Data are reported as percent control.

† "Expected" are expected responses calculated according to Colby, S. R. "Calculating Synergistic and Antagonistic Responses of Herbicide Combinations," *Weeds,* 15(1), pp 20-22 (1967).

Weeds other than those specifically listed in Tables J and K are also controlled by mixtures of Compound I and Compound 7. Different ratios of Compound 1 to Compound 7, and different formulation types, also provide useful weed control from the combination of the two herbicides.

The data in the following Tables L and M demonstrate the efficacy of the Formula I and Formula VII mixtures of this invention against specific weeds. The weed control afforded by the mixtures of this invention are not limited, however, to these species. Compound numbers are as described in the Index Table on page 13.

Test L Protocol

Pitted morningglory (*Ipomoea lacunosa*), common ragweed (*Ambrosia artemisiifolia*) and purslane (*Portulaca oleracea*) seeds were planted in 10-cm square plastic pots filled with a 60:40 ratio of sterilized sandy loam soil and Metro-mix® 350 potting mixture. The plants were treated postemergence with the test compounds formulated with a non-phytotoxic solvent. Compound 1 was applied at 64 g ai/ha. Compound 8 was applied at 250 and 500 g ai/ha. Mixtures of Compound 1 at 64 g ai/ha with Compound 8 at 250 and 500 g ai/ha were also applied. The treated plants were grown in a greenhouse. At the end of the tests, the plants were visually rated and compared with untreated controls using a scale of 0 to 100 where 0 indicates no effect and 100 indicates complete control.

Results of Test L are shown in Table L, which lists the observed response of specific weeds to Compound 1 and Compound 8 applied alone as single active ingredients, the observed responses of specific weeds to mixtures of Compound 1 and Compound 8, and the expected additive effect of the herbicidal mixtures of Compound 1 and Compound 8 (Colby's equation).

TABLE L*

| Effect of Compound 1 and Compound 8 as Active Ingredients Alone and in Mixture | | | | | | | |
|---|---|---|---|---|---|---|---|
| Cmpd 1 | Cmpd 8 | Morningglory | | Ragweed | | Purslane | |
| | | Mean | Expected† | Mean | Expected | Mean | Expected |
| *Alone* | | | | | | | |
| 64 | 0 | 20 | - | 80 | - | 70 | - |
| 0 | 250 | 0 | - | 0 | - | 0 | - |
| 0 | 500 | 0 | - | 0 | - | 0 | - |
| *Mixtures* | | | | | | | |
| 64 | 250 | 60 | 20 | 100 | 80 | 90 | 70 |
| 64 | 500 | 30 | 20 | 100 | 80 | 80 | 70 |

* Rates are expressed in g ai/ha for Compound 1 and Compound 8. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test M Protocol

Bermudagrass (*Cynodon dactylon*), guineagrass (*Panicum maximum*), and johnsongrass seeds were planted in 10-cm square plastic pots filled with a 60:40 ratio of sterilized sandy loam soil and Metro-mix® 350 potting mixture. The plants were treated postemergence with the test compounds formulated with a non-phytotoxic solvent. Compound 1 was applied at 125 g ai/ha. Compound 8 was applied at 500 g ai/ha. Mixtures of Compound 1 at 125 g ai/ha with Compound 8 at 500 g ai/ha were also applied. The treated plants were grown in a greenhouse. At the end of the tests, the plants were visually rated and compared with untreated controls using a scale of 0 to 100 where 0 indicates no effect and 100 indicates complete control.

Results of Test M are shown in Table M, which lists the observed response of specific weeds to Compound 1 and Compound 8 applied alone as single active ingredients, the observed responses of specific weeds to mixtures of Compound 1 and Compound 8, and the expected additive effect of the herbicidal mixtures of Compound 1 and Compound 8 (Colby's equation).

TABLE M*

| Effect of Compound 1 and Compound 8 as Active Ingredients Alone and in Mixture | | | | | | | |
|---|---|---|---|---|---|---|---|
| Cmpd 1 | Cmpd 8 | Bermudagrass | | Guineagrass | | Johnsongrass | |
| | | Mean | Expected† | Mean | Expected | Mean | Expected |
| *Alone* | | | | | | | |
| 125 | 0 | 0 | - | 30 | - | 30 | - |
| 0 | 500 | 0 | - | 0 | - | 0 | - |
| *Mixture* | | | | | | | |
| 125 | 500 | 50 | 0 | 70 | 30 | 50 | 30 |

* Rates are expressed in g ai/ha for Compound I and Compound 8. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Weeds other than those specifically listed in Tables L and M are also controlled by mixtures of Compound 1 and Compound 8. Different ratios of Compound 1 to Compound 8, and different formulation types, also provide useful weed control from the combination of the two herbicides.

The data in the following Tables N and O demonstrate the efficacy of the Formula **I** and Formula **VIII** mixtures of this invention against specific weeds. The weed control afforded by the mixtures of this invention are not limited, however, to these species. Compound numbers are as described in the Index Table on page 13.

Test N Protocol

Dallisgrass (*Paspalum dilatatum*), broadleaf signalgrass (*Brachiaria platyphylla*), smooth crabgrass (*Digitaria ischaemum*), southern sandbur (*Cenchrus echinatus*) and common ragweed (*Ambrosia artemisiifolia*) seeds were planted in a growing medium comprising a 75:25 ratio of sterilized sandy loam soil and Metro-mix® 350 potting mixture and treated preemergence with the test compounds formulated with a non-phytotoxic solvent. Compound 1 was applied at 32 g ai/ha. Compound 9 was applied at 500 g ai/ha. Mixtures of Compound 1 at 32 g ai/ha with Compound 9 at 500 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test N are shown in Table N, which lists the observed response of specific weeds to Compound 1 and Compound 9 applied alone as single active ingredients, the observed responses of specific weeds to mixtures of Compound 1 and Compound 9, and the expected additive effect of the herbicidal mixtures of Compound 1 and Compound 9 (Colby's equation).

**TABLE N***

Effect of Compound 1 and Compound 9 as Active Ingredients Alone and in Mixture

| Cmpd 1 | Cmpd 9 | Dallisgrass Mean | Dallisgrass Expected† | Signalgrass Mean | Signalgrass Expected | Crabgrass Mean | Crabgrass Expected |
|---|---|---|---|---|---|---|---|
| *Alone* | | | | | | | |
| 32 | 0 | 80 | - | 30 | - | 80 | - |
| 0 | 500 | 20 | - | 40 | - | 0 | - |
| *Mixture* | | | | | | | |
| 32 | 500 | 100 | 84 | 80 | 54 | 90 | 80 |

| Cmpd 1 | Cmpd 9 | Sandbur . | | Ragweed | |
|---|---|---|---|---|---|
| | | Mean | Expected | Mean | Expected |
| *Alone* | | | | | |
| 32 | 0 | 0 | - | 0 | - |
| 0 | 500 | 30 | - | 20 | - |
| *Mixture* | | | | | |
| 32 | 500 | 60 | 30 | 80 | 20 |

* Rates are expressed in g ai/ha for Compound 1 and Compound 9. Data are reported as percent control.

† "Expected" are expected responses calculated according to Colby, S. R. "Calculating Synergistic and Antagonistic Responses of Herbicide Combinations," *Weeds*, 15(1), pp 20-22 (1967).

Test O Protocol

Dallisgrass (*Paspalum dilatatum*), goosegrass (*Eleusine indica*), itchgrass (*Rottboellia exaltata*), johnsongrass (*Sorghum halepense*), and pitted morningglory (*Ipomoea lacunosa*) were grown in a greenhouse using a medium comprising a 60:40 ratio of sterilized sandy loam soil and Metro-mix® 350 potting mixture. The plants were treated postemergence with the test compounds formulated with a non-phytotoxic solvent. Compound 1 was applied at 32 and 64 g ai/ha. Compound 9 was applied at 250 g ai/ha. Mixtures of Compound 1 at 32 and 64 g ai/ha with Compound 9 at 250 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test O are shown in Table O, which lists the observed response of specific weeds to Compound 1 and Compound 9 applied alone as single active ingredients, the observed responses of specific weeds to mixtures of Compound 1 and Compound 9, and the expected additive effect of the herbicidal mixtures of Compound 1 and Compound 9 (Colby's equation).

**TABLE O***

Effect of Compound 1 and Compound 9
as Active Ingredients Alone and in Mixture

| Cmpd 1 | Cmpd 9 | Dallisgrass | | Goosegrass | | Itchgrass | |
|---|---|---|---|---|---|---|---|
| | | Mean | Expected† | Mean | Expected | Mean | Expected |
| *Alone* | | | | | | | |
| 32 | 0 | 0 | - | 0 | - | 0 | - |
| 64 | 0 | 0 | - | 30 | - | 0 | - |
| 0 | 250 | 0 | - | 0 | - | 0 | - |
| *Mixtures* | | | | | | | |
| 32 | 250 | 30 | 0 | 40 | 0 | 20 | 0 |
| 64 | 250 | 70 | 0 | 70 | 30 | 20 | 0 |

| Cmpd 1 | Cmpd 9 | Johnsongrass | | Morningglory | |
|---|---|---|---|---|---|
| | | Mean | Expected | Mean | Expected |
| *Alone* | | | | | |
| 32 | 0 | 0 | - | 0 | - |
| 64 | 0 | 20 | - | 20 | - |
| 0 | 250 | 0 | - | 0 | - |
| *Mixtures* | | | | | |
| 32 | 250 | 20 | 0 | 50 | 0 |
| 64 | 250 | 50 | 20 | 70 | 20 |

* Rates are expressed in g ai/ha for Compound 1 and Compound 9. Data are reported as percent control.

† "Expected" are expected responses calculated according to Colby, S. R. "Calculating Synergistic and Antagonistic Responses of Herbicide Combinations," *Weeds*, 15(1), pp 20-22 (1967).

Weeds other than those specifically listed in Tables N and O are also controlled by mixtures of Compound 1 and Compound 9. Different ratios of Compound 1 to Compound 9, and different formulation types, also provide useful weed control from the combination of the two herbicides.

The data in the following Tables P-T demonstrate the efficacy of the Formula **I** and Formula **IX** mixtures of this invention against specific weeds. The weed control afforded by the mixtures of this invention are not limited, however, to these species. Compound numbers are as described in the Index Table on page 13.

Test P Protocol

Bermudagrass (*Cynodon dactylon*), guineagrass (*Panicum maximum*), itchgrass (*Rottboellia exaltata*), johnsongrass (*Sorghum halepense*), peanut (*Arachis hypogaea*) and ragweed (*Ambrosia artemisiifolia*) seeds were planted in 10-cm plastic pots containing a 75:25 ratio of sterilized sandy loam soil and Metro-mix® 350 potting mixture and treated preemergence with the test compounds formulated with a non-phytotoxic solvent. Compound 1 was applied at 64 g ai/ha. Compound 10 was applied at 500 g ai/ha. Mixtures of Compound 1 at 64 g ai/ha with Compound 10 at 500 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test P are shown in Table P, which lists the observed response of specific weeds to Compound 1 and Compound 10 applied alone as single active ingredients, the observed responses of specific weeds to mixtures of Compound 1 and Compound 10, and the expected additive effect of the herbicidal mixtures of Compound 1 and Compound 10 (Colby's equation).

**TABLE P***

**Effect of Compound 1 and Compound 10 as Active Ingredients Alone and in Mixture**

| Cmpd 1 | Cmpd 10 | Bermudagrass | | Guineagrass | | Itchgrass | |
|---|---|---|---|---|---|---|---|
| | | Mean | Expected† | Mean | Expected | Mean | Expected |
| *Alone* | | | | | | | |
| 64 | 0 | 80 | - | 90 | - | 0 | - |
| 0 | 500 | 90 | - | 0 | - | 0 | - |
| *Mixture* | | | | | | | |
| 64 | 500 | 100 | 98 | 100 | 90 | 70 | 0 |

| Cmpd 1 | Cmpd 10 | Johnsongrass | | Peanut | | Ragweed | |
|---|---|---|---|---|---|---|---|
| | | Mean | Expected | Mean | Expected | Mean | Expected |
| *Alone* | | | | | | | |
| 64 | 0 | 0 | - | 20 | - | 40 | - |
| 0 | 500 | 0 | - | 30 | - | 70 | - |
| *Mixture* | | | | | | | |
| 64 | 500 | 90 | 0 | 50 | 44 | 90 | 83 |

* Rates are expressed in g ai/ha for Compound 1 and Compound 10. Data are reported as percent control.

† "Expected" are expected responses calculated according to Colby, S. R. "Calculating Synergistic and Antagonistic Responses of Herbicide Combinations," *Weeds*, 15(1), pp 20-22 (1967).

Test Q Protocol

Bermudagrass (*Cynodon dactylon*), goosegrass (*Eleusine indica*) and pitted morningglory (*Ipomoea lacunosa*) seeds were planted in a growing medium comprising a 75:25 ratio of sterilized sandy loam soil and Metro-mix®

350 potting mixture and treated preemergence with the test compounds formulated with a non-phytotoxic solvent. Compound 1 was applied at 32 g ai/ha. Compound 10 was applied at 192 g ai/ha. Mixtures of Compound I at 32 g ai/ha with Compound 10 at 192 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test Q are shown in Table Q, which lists the observed response of specific weeds to Compound 1 and Compound 10 applied alone as single active ingredients, the observed responses of specific weeds to mixtures of Compound I and Compound 10, and the expected additive effect of the herbicidal mixtures of Compound 1 and Compound 10 (Colby's equation).

TABLE Q*

| Effect of Compound 1 and Compound 10 as Active Ingredients Alone and in Mixture | | | | | | | |
|---|---|---|---|---|---|---|---|
| Cmpd 1 | Cmpd 10 | Bermudagrass | | Goosegrass | | Morningglory | |
| | | Mean | Expected† | Mean | Expected | Mean | Expected |
| *Alone* | | | | | | | |
| 32 | 0 | 30 | - | 70 | - | 0 | - |
| 0 | 192 | 0 | - | 0 | - | 0 | - |
| *Mixture* | | | | | | | |
| 32 | 192 | 70 | 30 | 90 | 70 | 80 | 0 |

* Rates are expressed in g ai/ha for Compound 1 and Compound 10. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test R Protocol

Dallisgrass (*Paspalum dilatatum*), annual bluegrass (*Poa annua*), southern sandbur (*Cenchrus echinatus*), alfalfa (*Medicago sativa*), and peanut (*Arachis hypogaea*) seeds were planted in a growing medium comprising a 75:25 ratio of sterilized sandy loam soil and Metro-mix® 350 potting mixture and treated preemergence with the test compounds formulated with a non-phytotoxic solvent. Compound 1 was applied at 64 g ai/ha. Compound 10 was applied at 384 g ai/ha. Mixtures of Compound 1 at 64 g ai/ha with Compound 10 at 384 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test R are shown in Table R, which lists the observed response of specific weeds to Compound 1 and Compound 10 applied alone as single active ingredients, the observed responses of specific weeds to mixtures of Compound 1 and Compound 10, and the expected additive effect of the herbicidal mixtures of Compound 1 and Compound 10 (Colby's equation).

## TABLE R*

Effect of Compound 1 and Compound 10 as Active Ingredients Alone and in Mixture

| Cmpd 1 | Cmpd 10 | Dallisgrass | | Bluegrass | | Sandbur | |
|---|---|---|---|---|---|---|---|
| | | Mean | Expected† | Mean | Expected | Mean | Expected |
| *Alone* | | | | | | | |
| 64 | 0 | 60 | - | 0 | - | 0 | - |
| 0 | 384 | 30 | - | 60 | - | 20 | - |
| *Mixture* | | | | | | | |
| 64 | 384 | 100 | 72 | 90 | 60 | 100 | 20 |

| Cmpd 1 | Cmpd 10 | Alfalfa | | Peanut | |
|---|---|---|---|---|---|
| | | Mean | Expected | Mean | Expected |
| *Alone* | | | | | |
| 64 | 0 | 0 | - | 0 | - |
| 0 | 384 | 20 | - | 30 | - |
| *Mixture* | | | | | |
| 64 | 384 | 100 | 20 | 50 | 30 |

* Rates are expressed in g ai/ha for Compound 1 and Compound 10. Data are reported as percent control.

† "Expected" are expected responses calculated according to Colby, S. R. "Calculating Synergistic and Antagonistic Responses of Herbicide Combinations," *Weeds*, 15(1), pp 20-22 (1967).

Test S Protocol

Pitted morningglory (*Ipomoea lacunosa*) was grown in a greenhouse in 10-cm plastic pots containing a 60:40 ratio of sterilized sandy loam soil and Metro-mix® 350 potting mixture. When the plants reached the 5- to 8-leaf stage, they were treated postemergence with the test compounds formulated with a non-phytotoxic solvent. Compound 1 was applied at 125 g ai/ha. Compound 10 was applied at 250 and 500 g ai/ha. Mixtures of Compound 1 at 125 g ai/ha with Compound 10 at 250 and 500 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test T are shown in Table T, which lists the observed response of specific weeds to Compound 1 and Compound 10 applied alone as single active ingredients, the observed responses of specific weeds to mixtures of Compound 1 and Compound 10, and the expected additive effect of the herbicidal mixtures of Compound 1 and Compound 10 (Colby's equation).

TABLE S*

| Effect of Compound 1 and Compound 10 as Active Ingredients Alone and in Mixture | | | |
|---|---|---|---|
| Cmpd 1 | Cmpd 10 | Morningglory | |
| | | Mean | Expected† |
| *Alone* | | | |
| 125 | 0 | 70 | - |
| 0 | 250 | 0 | - |
| 0 | 500 | 20 | - |
| *Mixtures* | | | |
| 125 | 250 | 80 | 70 |
| 125 | 500 | 100 | 76 |

* Rates are expressed in g ai/ha for Compound 1 and Compound 10. Data are reported as percent control.
† "Expected" are expected responses calculated according to Colby, S. R. "Calculating Synergistic and Antagonistic Responses of Herbicide Combinations," *Weeds,* 15(1), pp 20-22 (1967).

Test T Protocol

Annual bluegrass *(Poa annua)*, southern sandbur *(Cenchrus echinatus)*, goosegrass *(Eleusine indica)*, guineagrass (*Panicum maximum)*, and smooth crabgrass (*Digitaria ischaemum*) were grown in a greenhouse using a medium comprising a 60:40 ratio of sterilized sandy loam soil and Metro-mix® 350 potting mixture. The plants were treated postemergence with the test compounds formulated with a non-phytotoxic solvent. Compound 1 was applied at 125 g ai/ha. Compound 10 was applied at 750 g ai/ha. Mixtures of Compound 1 at 125 g ai/ha with Compound 10 at 750 g ai/ha were also applied. The treated plants were grown in a greenhouse until they were rated at the end of the test. The plants were visually rated and compared with untreated controls using a scale of 0 to 100 where 0 indicates no effect and 100 indicates complete control.

Results of Test T are shown in Table T, which lists the observed response of specific weeds to Compound 1 and Compound 10 applied alone as single active ingredients, the observed responses of specific weeds to mixtures of Compound 1 and Compound 10, and the expected additive effect of the herbicidal mixtures of Compound 1 and Compound 10 (Colby's equation).

**TABLE T***

Effect of Compound 1 and Compound 10 as Active Ingredients Alone and in Mixture

| Cmpd 1 | Cmpd 10 | Annual Bluegrass | | Guineagrass | | Goosegrass | |
|---|---|---|---|---|---|---|---|
| | | Mean | Expected† | Mean | Expected | Mean | Expected |
| *Alone* | | | | | | | |
| 125 | 0 | 0 | - | 30 | - | 30 | - |
| 0 | 750 | 10 | - | 80 | - | 70 | - |
| *Mixture* | | | | | | | |
| 125 | 750 | 50 | 10 | 100 | 86 | 80 | 79 |

| Cmpd 1 | Cmpd 10 | Crabgrass | | Sandbur | |
|---|---|---|---|---|---|
| | | Mean | Expected | Mean | Expected |
| *Alone* | | | | | |
| 125 | 0 | 20 | - | 20 | - |
| 0 | 750 | 60 | - | 90 | - |
| *Mixture* | | | | | |
| 125 | 750 | 80 | 68 | 100 | 92 |

* Rates are expressed in g ai/ha for Compound 1 and Compound 10. Data are reported as percent control.

† "Expected" are expected responses calculated according to Colby, S. R. "Calculating Synergistic and Antagonistic Responses of Herbicide Combinations," *Weeds*, 15(1), pp 20-22 (1967).

Weeds other than those specifically listed in Tables P-T are also controlled by mixtures of Compound 1 and Compound 10. Different ratios of Compound 1 to Compound 10, and different formulation types, also provide useful weed control from the combination of the two herbicides.

## Claims

**1.** A herbicidally effective mixture of 2-[2,4-dichloro-5-(2-propynyloxy)-phenyl]-5,6,7,8-tetrahydro-1,2,4-triazolo [4,3-*a*]pyridin-3(2*H*)-one (Formula I) with a herbicidal compound selected from

(a) sulfometuron methyl (Formula **II**),
(b) metsulfuron methyl (Formula **III**),
(c) glyphosate (Formula **IV**),
(d) glufosinate (Formula **V**),
(e) paraquat (Formula **VI**),
(f) diuron (Formula **VII**),
(g) bromacil (Formula **VIII**), and

(h) hexazinone (Formula **IX**),

and their agriculturally suitable salts.

**2.** The mixture of Claim 1 which is the compound of Formula **I** and the compound of Formula **II.**

**3.** The mixture of Claim 1 which is the compound of Formula **I** and the compound of Formula **III.**

**4.** The mixture of Claim I which is the compound of Formula **I** and the compound of Formula **IV.**

**5.** The mixture of Claim 1 which is the compound of Formula **I** and the compound of Formula V.

**6.** The mixture of Claim I which is the compound of Formula **I** and the compound of Formula **VI.**

**7.** The mixture of Claim I which is the compound of Formula **I** and the compound of Formula **VII.**

**8.** The mixture of Claim 1 which is the compound of Formula **I** and the compound of Formula **VIII.**

**9.** The mixture of Claim 1 which is the compound of Formula **I** and the compound of Formula **IX.**

**10.** An agriculturally suitable composition for controlling the growth of undesired vegetation comprising an effective amount of the mixture of any of Claims 1-9 and at least one of the following: surfactant, solid or liquid diluent.

**11.** A method for controlling the growth of undesired vegetation by applying to the locus of the undesired vegetation a herbicidally effective amount of the mixture of any of Claims 1-9.

**Patentansprüche**

**1.** Herbizid wirksame Mischung von. 2-[2,4-Dichlor-5-(2-propinyloxy)phenyl]-5,6,7,8-tetrahydro-1,2,4-triazolo[4,3-α]pyridin-3(2*H*)-on (Formel I) mit einer herbiziden Verbindung, ausgewählt aus:

(a) Sulfometuron-methyl (Formel II),
(b) Metsulfuron-methyl (Formel III)
(c) Glyphosat (Formel IV)
(d) Glufosinat (Formel V)
(e) Paraquat (Formel VI)
(f) Diuron (Formel VII)
(g) Bromacil (Formel VIII)
(h) Hexazinon (Formel IX)

sowie deren landwirtschaftlich geeigneten Salze.

**2.** Mischung nach Anspruch 1, die die Verbindung der Formel I und die Verbindung der Formel II ist.

**3.** Mischung nach Anspruch 1, die die Verbindung der Formel I und die Verbindung der Formel III ist.

**4.** Mischung nach Anspruch 1, die die Verbindung der Formel I und die Verbindung der Formel IV ist.

**5.** Mischung nach Anspruch 1, die die Verbindung der Formel I und die Verbindung der Formel V ist.

**6.** Mischung nach Anspruch 1, die die Verbindung der Formel I und die Verbindung der Formel VI ist.

**7.** Mischung nach Anspruch 1, die die Verbindung der Formel I und die Verbindung der Formel VII ist.

**8.** Mischung nach Anspruch 1, die die Verbindung der Formel I und die Verbindung der Formel VIII ist.

**9.** Mischung nach Anspruch 1, die die Verbindung der Formel I und die Verbindung der Formel IX ist.

**10.** Landwirtschaftlich geeignete Zusammensetzung zur Bekämpfung des Wachstums unerwünschter Vegetation, aufweisend eine wirksame Menge der Mischung nach einem der vorgenannten Ansprüche 1 bis 9 und mindestens eines der folgenden: Tensid, festes oder flüssiges Streckmittel.

**11.** Verfahren zur Bekämpfung des Wachstums unerwünschter Vegetation, indem eine herbizid wirksame Menge der Mischung nach einem der Ansprüche 1 bis 9 auf den Ort der unerwünschten Vegetation aufgebracht wird.

**Revendications**

**1.** Un mélange herbicidement efficace de 2-[2,4-dichloro-5-(2-propynyloxy)phényl]-5,6,7,8-tétrahydro-1,2,4-triazolo [4,3-*a*]-pyridin-3(2*H*)-one formule **I**) avec un composé herbicide choisi parmi :

(a) sulfometuron méthyle (formule **II**)
(b) metsulfuron méthyle (formule **III**)
(c) glyphosate (formule **IV**)
(d) glufosinate (formule **V**)
(e) paraquat (formule **VI**)
(f) diuron (formule **VII**)
(g) bromacil (formule **VIII**), et
(h) hexazinone (formule **IX**)

et leurs sels convenant en agriculture.

**2.** Le mélange selon la revendication 1, qui est le composé de formule **I** et le composé de formule **II.**

**3.** Le mélange selon la revendication 1, qui est le composé de formule **I** et le composé de formule **III.**

**4.** Le mélange selon la revendication 1, qui est le composé de formule **I** et le composé de formule **IV.**

**5.** Le mélange selon la revendication 1, qui est le composé de formule **I** et le composé de formule **V.**

**6.** Le mélange selon la revendication 1, qui est le composé de formule **I** et le composé de formule **VI.**

**7.** Le mélange selon la revendication 1, qui est le composé de formule **I** et le composé de formule **VII.**

**8.** Le mélange selon la revendication 1, qui est le composé de formule **I** et le composé de formule **VIII.**

**9.** Le mélange selon la revendication **1,** qui est le composé de formule **I** et le composé de formule **IX.**

**10.** Une composition convenant en agriculture pour le contrôle de la croissance d'une végétation indésirable comprenant une quantité efficace d'un mélange selon l'une quelconque des revendications 1 à 9 et au moins un des agents suivants : agent tensioactif, diluant liquide ou solide.

**11.** Une méthode de contrôle de la croissance de la végétation indésirable en appliquant au site de la végétation indésirable une quantité herbicidement efficace du mélange selon l'une quelconque des revendications 1 à 9.